# EUROPEAN PATENT APPLICATION

(11) **EP 4 837 862 A1**
(43) Date of publication of application: **11.11.2026**
(21) Application number: 25174912.3
(22) Date of filing: 07.05.2025
(51) Int. Cl.: B65G 1/04

(54) **INTERMEDIATE FRAME FOR AUTOMATED STORAGE AND RETRIEVAL SYSTEMS**

(71) Applicant: AutoStore Technology AS, 5578 Nedre Vats (NO)
(72) Inventor: Austrheim, Trond, 5578 Nedre Vats (NO); Klungland, Kjell Tore, 5578 Nedre Vats (NO); Vikingstad, Geir, 5578 Nedre Vats (NO)
(74) Representative: Kilburn & Strode LLP

(57) **Abstract**

There is described an intermediate frame (500) for heightening a storage grid (100) of an automated storage and retrieval system (1000), the storage grid (100) comprising a plurality of vertically extending structural upright members (104) defining one or more vertically extending storage columns (102) within each of which one or more storage containers (112) may be stacked. The intermediate frame (500) is configured to define, in use, a lower portion (100L) of the storage grid (100) below the intermediate frame (500), and an upper portion (100U) of the storage grid (100) above the intermediate frame (500). The upper portion (100U) of the storage grid (100) is supported by the lower portion (100L) of the storage grid (100) and by the intermediate frame (500), in cooperation. The intermediate frame may be in the shape of a grid, with one or more grid openings configured to support respective removable decks. These removable decks may be designed to be positioned on the intermediate frame, or removed therefrom, by any container-handling vehicle operating on the storage grid. In this way, the storage grid may be heightened to store additional storage containers. The additional storage containers may be placed on the removable deck, rather than being stacked upon lower storage containers. However, any storage containers stored below the removable deck may still be accessed by removing the removable deck, and this may be done via the container-handling vehicles.

## Description

### TECHNICAL FIELD

This disclosure describes an intermediate frame for a grid-based automated storage and retrieval system. This disclosure also describes a removable deck for such an intermediate frame. This disclosure also describes related storage grids, automated storage and retrieval systems and methods.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated as needed as goods enter and leave the warehouse.

Warehouse workers may be assisted by robotic pickers and by automated inventory management systems. Automated transit systems may also be implemented in traditional warehouse set ups to move goods from their inventory location to a picking and/or packing station.

An alternative to a traditional warehouse set up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged above the grid, along which robotic container-handling vehicles configured to lift containers from the grid can travel. The container handling vehicles are configured to transport containers from the grid and to deliver them to ports or stations situated at the periphery of the grid so that the goods from within the container can be picked and packed. The bins or containers are usually stacked on the floor.

In such systems, those containers which contain more in-demand goods or parts tend to remain at or close to the top, whilst containers which contain less often used goods or parts tend to remain deeper within the stacks, and are thus less easily or quickly accessed when needed. However, in some applications, such as grocery, faster access to a larger number of containers may be necessary. There may also be a need for 'staging', wherein items are pre-picked and stored in the grid before use or delivery.

Grid-based systems as described herein are usually limited in height. A factor that contributes to this limitation is the structural strength of the structural upright members that support the weight of the grid, rail system disposed on it, and any storage and retrieval vehicles that may operate thereon. Another factor that contributes to the limitation is the structural strength of the storage bins: since, often, the storage bins are stacked on each other, lower-level storage bins will need to bear the weight of the storage bins stacked thereon, and of any products that those bins may store thereinside.

The present disclosure sets out to at least mitigate any drawbacks associated with the prior art. One or more aspects of the invention are laid out in the appended claims.

### BRIEF DESCRIPTION OF THE DRAWINGS

The intermediate frame, removable deck, storage grid, automated torage and retrieval system and methods of this disclosure will now be described in more detail in connection with a number of arrangements shown in the accompanying drawings, in which:
Fig. 1 shows a perspective view of a storage and retrieval system comprising a grid and a plurality of robotic container-handling vehicles configured to retrieve and/or rearrange goods stored within the grid;
Fig. 2 shows, schematically, a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing robotic operations described herein;
Fig. 5, is a perspective view of a storage grid for an automated storage and retrieval system including an intermediate frame as described herein;
Fig. 6 is an enlarged view of a particular of Fig. 5, showing the intermediate frame more closely;
Fig. 7 is an enlarged view of a portion of the intermediate frame of Figs. 5 and 6, showing certain construction details thereof;
Fig. 8 corresponds to Fig. 6, and in addition shows storage containers being stacked in one of the storage columns of the storage grid;
Fig. 9 corresponds to Figs. 6 and 8, and in addition shows a removable deck as described herein being placed within a suitable opening in the intermediate frame;
Fig. 10 is a top perspective view of the removable deck of Fig. 9;
Fig. 11 is a bottom perspective view of the removable deck of Figs. 9 and 10;
Fig. 12 is a cross-sectional perspective view of a portion of the storage grid as shown in Fig. 9, showing particulars of the intermediate frame and removable deck, with the removable deck not yet fully disposed within the intermediate frame;
Fig. 13 corresponds to Fig. 12, but shows the removable deck fully disposed within the intermediate frame (though not yet secured in place);
Fig. 14 is equivalent to Fig. 12, with the arrangement shown from a different perspective angle;
Fig. 15 is equivalent to Fig. 13, with the arrangement shown from a different perspective angle, and in addition shows a storage container placed on the removable deck (with the removable deck secured in place);
Fig. 16 corresponds to Fig. 5, with the storage grid described herein shown in an in-use status, with a number of storage containers stored in a storage column thereof; and,
Fig. 17 is a flow chart illustrating methods as described herein.

### DETAILED DESCRIPTION

In overview, the disclosure relates to the concept of providing a reinforcing intermediate frame to heighten the storage grid, or, in other words, so that, keeping all other arrangements unchanged, the presence of the intermediate frame allows a storage grid of increased height to be erected, thereby providing additional storage space that would otherwise be possible.

The intermediate frame, as the name suggests, is positioned at some intermediate vertical position within the storage grid, so that, in cooperation with the structural upright members on which it rests, or to which it is connected, it creates a reinforcement to the grid that allows the grid to be heightened vertically to include additional storage space.

The inventors have appreciated the need to provide solutions for heightening storage grids. Factors that have limited storage grid height have included the strength of the structural members used to erect the storage grid and the strength of the storage containers (since the storage containers are often stacked upon one another in the storage grid, so that the lowermost storage containers have to bear the weight of uppermost storage containers, and any products stored therein). Rarely, the height of a ceiling within a designated storage space, such as a storage warehouse, has limited the height of grid-based automated storage and retrieval solutions. The present concepts aim at removing at least some of the constraints and limitations in the prior art.

The disclosure also relates to height-adjustable foot devices to support the grid base rails as described hereinabove. There is an intrinsic benefit in providing the required foot devices as height-adjustable foot devices, so that a single type or design of height-adjustable foot device can be used throughout the same grid installation. Also, by providing height-adjustable foot devices, the height of the height-adjustable foot devices could be adjusted on-site, depending on the actual, local height of the floor, that is depending on the actual installation requirements.

The disclosure also relates to related accessories, such as a removable deck for intermediate frames as disclosed herein. Making a storage grid taller by using intermediate frames as described herein, does not remove in itself the limitations related to the ability of the storage containers to bear weight. In this respect, the inventors have come up with the idea of using removable decks as described herein in connection with the intermediate frame described herein. The removable decks described herein may be supported within the intermediate frame. So, the intermediate frame does not only constitute a reinforcement for the grid, but it is also a structure on which one or more such removable decks may be placed. Once any removable decks are in place, it is possible to store a number of containers thereon. The weight of these containers will be discharged onto the removable decks, and from there onto intermediate frame and the structural members forming the storage grid. This weight so transferred will therefore not load any lower bins, stored in the storage grid. The inventors have devised specific designs of removable decks, which not only perform the intended function, but in addition can also be handled by any container-handling vehicles operating on the grid. Accordingly, the operations of placement on or removal of such decks from the intermediate frame may be automated alongside all other container-handling operations on the grid, as it will be described further below.

The present disclosure also naturally encompasses storage grids having one or more intermediate frames as described herein, as well as full automated storage and retrieval systems (ASRSs) comprising such storage grids, and related operation methods

### Automated storage and retrieval system overview

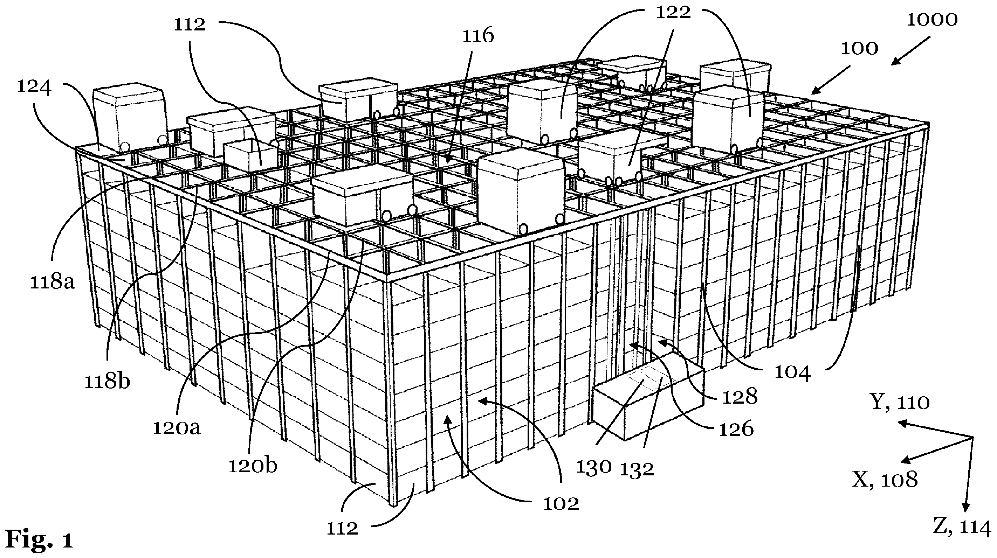

Referring to the system shown in Fig. 1, a grid 100 comprises a frame formed by a plurality of generally rectilinear, adjacent vertical columns 102 formed between vertical frame members or vertically extending structural upright members 104, with the grid 100 extending in the X and Y directions 108, 110, as shown in Fig. 1. The grid frame/structural upright members 104 may be fabricated of any appropriate material; for example, the members 104 may be formed of extruded aluminium. Storage containers or bins 112 are stacked on top of each other, traditionally in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or, to say it more simply, "robots" 122, 202, 204, which can be of a range of size, shape and function, are provided and configured to run on the rails 118, 120 and to transport bins 112 in both the X and Y directions 108, 110. The robots 122, 202, 204 are additionally configured to lift and lower bins 112 from/into the columns 102 in the Z direction 114, the bins 112 optionally being guided by the vertically extending structural upright members 104. The robots 122, 202, 204 access the bins 112 via access openings 124 situated above the columns 102 and formed between the rails 118, 120.

Some columns 102 may be used for alternative purposes than container storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid; however, ports can be located at any vertical position along the port columns 126, 128. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column 126, 128. As such, a port 130, 132 can comprise a conveyor (not shown in Fig. 1) onto which a bin 112 may be lowered and transported horizontally out of the port column 126, 128. The port columns 126, 128 include an opening or access point through which bins 112 can enter and leave the column.

Containers 112 can be transported along the top of the grid 100 to and/or from a port column 126, 128 by the robots 122, 202, 204, and from a port 130, 132 to a location outside the grid 100, which port 130, 132 may be an access station (not shown) for processing of the container 112 or its contents, such as a picking station for adding content to, or removing content from, the container 112. In alternative examples (not shown), the container 112 may be transported to a port of another grid on the same or another level, or to an external facility. Transport of containers 112 to and from the ports 130, 132 may be by any appropriate means (not shown) including conveyors, transport vehicles, lifts or robots.

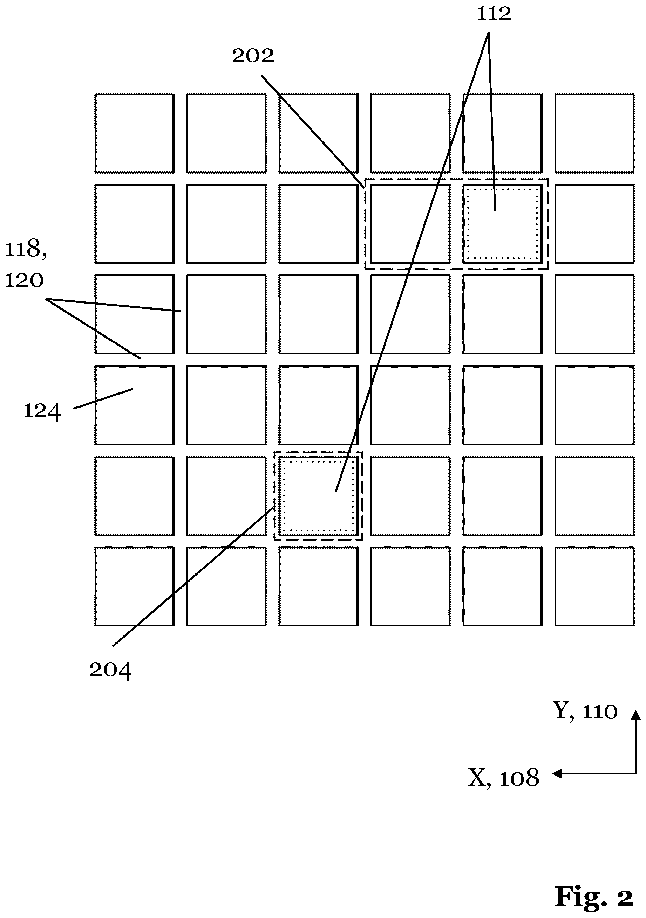

Referring now to the system shown in Fig. 2, the X-Y configuration of the rail system 116 can be seen in more detail, together with robots 202, 204 of different types. The rail system 116 includes rails 118, 120 defining between them vertical column access openings 124 for access to bins 112. The rails 118, 120 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 118, 120 may comprise a single track or multiple parallel tracks in each of the X and Y directions 108, 110.

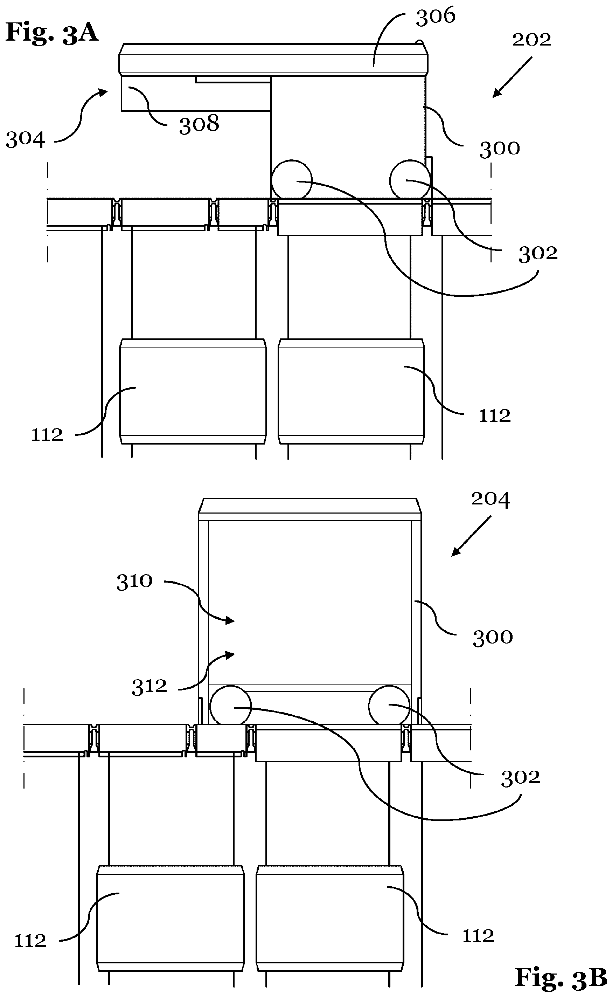

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 118, 120. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

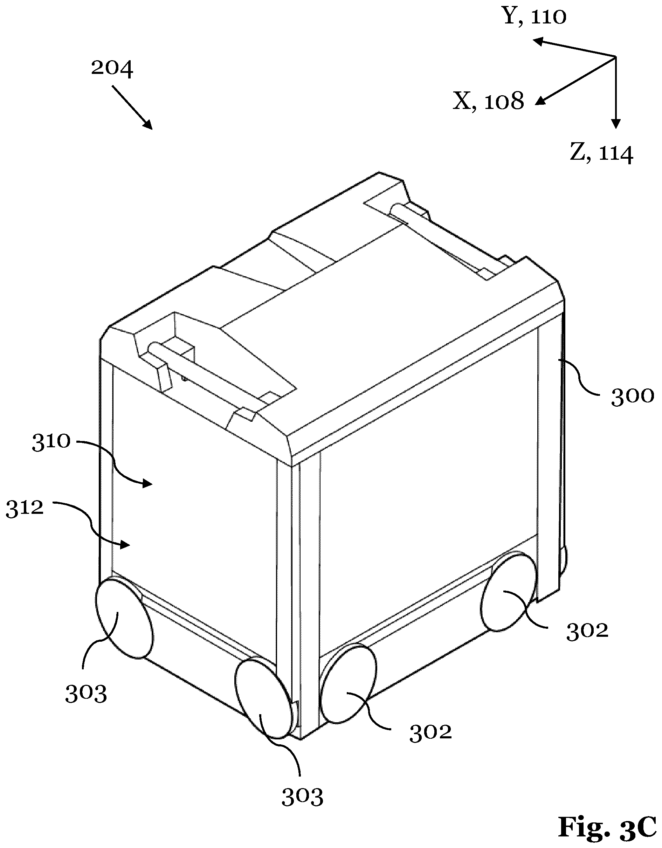

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

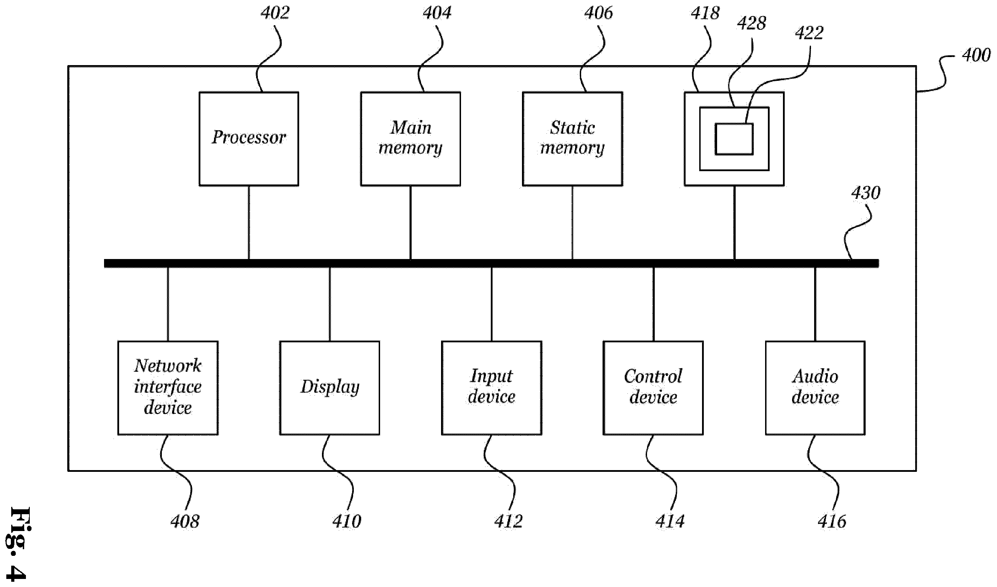

Control and monitoring of the automated storage and retrieval system 1000, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the computer methods described herein may form all or part of a computer-implemented method, or a system configured to perform the methods described herein.

With reference to Fig. 4, a processing system 400 suitable for carrying out the computer methods described herein will now be described. Fig. 4 shows a block diagram of one implementation of a processing system 400 in the form of a computing device within which a set of instructions for causing the computing device to perform any one or more of the computer methods described herein may be executed. In some systems, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the computer methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the computer operations and computer steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the computer methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various computer methods described herein may be implemented by a computer program. The computer program may include computer code arranged to instruct a computer to perform the functions of one or more of the various computer methods described herein. The computer program and/or the code for performing such methods may be provided to an apparatus, such as a computer, on one or more computer-readable media (CRM) or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and computer methods described herein.

In an arrangement, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system 1000

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary, as discussed above.

### Heightening the automated storage and retrieval system (ASRS)

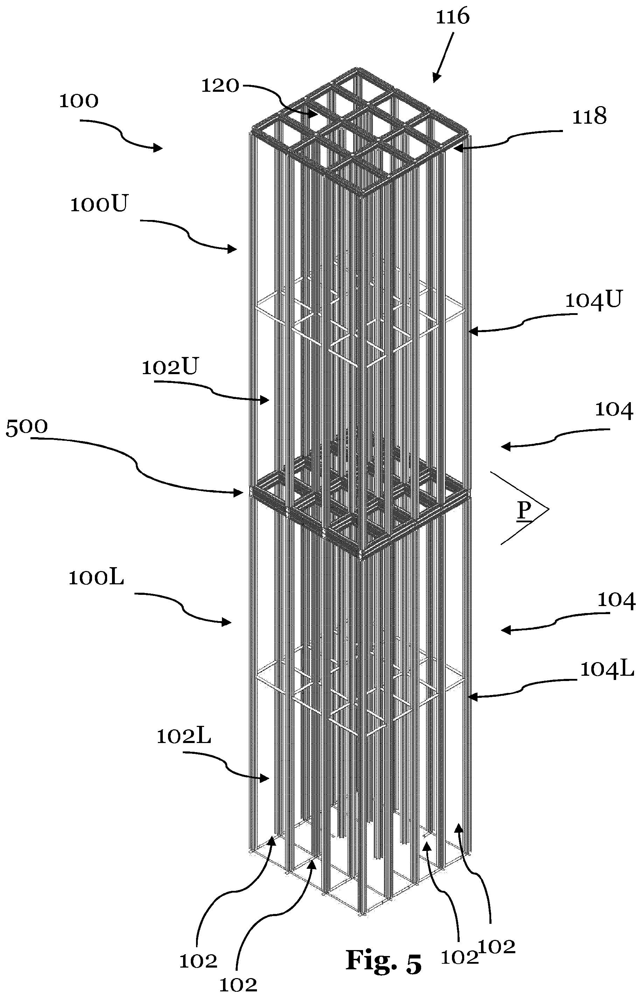

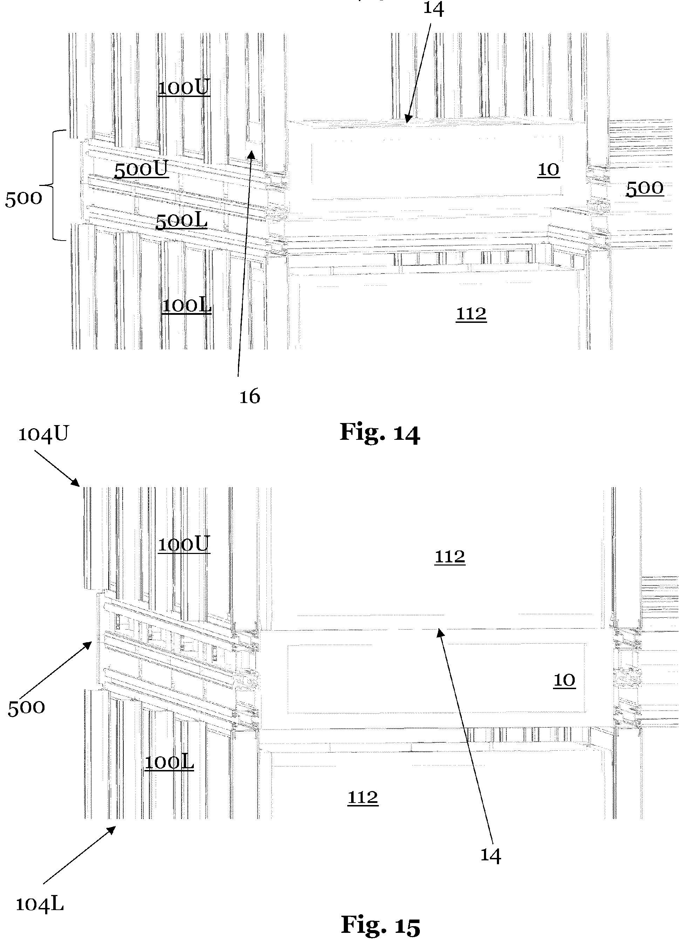

Referring now to Figs. 5 to 17, and starting with Fig. 5, there is shown an intermediate frame 500 for heightening a storage grid 100 of an automated storage and retrieval system. The use of the intermediate frame 500 allows a taller grid 100 to be erected than could otherwise be achieved. The storage grid 100 has a plurality of vertically extending structural upright members 104 that define one or more vertically extending storage columns 102 within each of which one or more storage containers 112 may be stored, as previously discussed. The intermediate frame 500, in the described arrangement, is a predominantly two-dimensional structure which extends over a notional plane P, as shown in Fig. 5. The presence of the intermediate frame 500 defines a lower portion 100L of the storage grid 100 below the intermediate frame 500, and an upper portion 100U of the storage grid 100 above the intermediate frame 500. The upper portion 100U of the storage grid 100 is supported by the lower portion 100L of the storage grid 100 and by the intermediate frame 500 in cooperation. This means that the intermediate frame 500 strengthens and/stiffens the lower grid portion 100L, which, thanks to the intermediate frame 500, can now support a tall upper grid portion 100U, thereby incorporating additional storage volume in the grid 100. While Fig. 5 shows a relatively 'thin but tall' grid 100, other configurations are possible. Further, the intermediate frame 500 could be used only on a portion of the grid 100, and not across the full longitudinal and transversal extensions thereof.

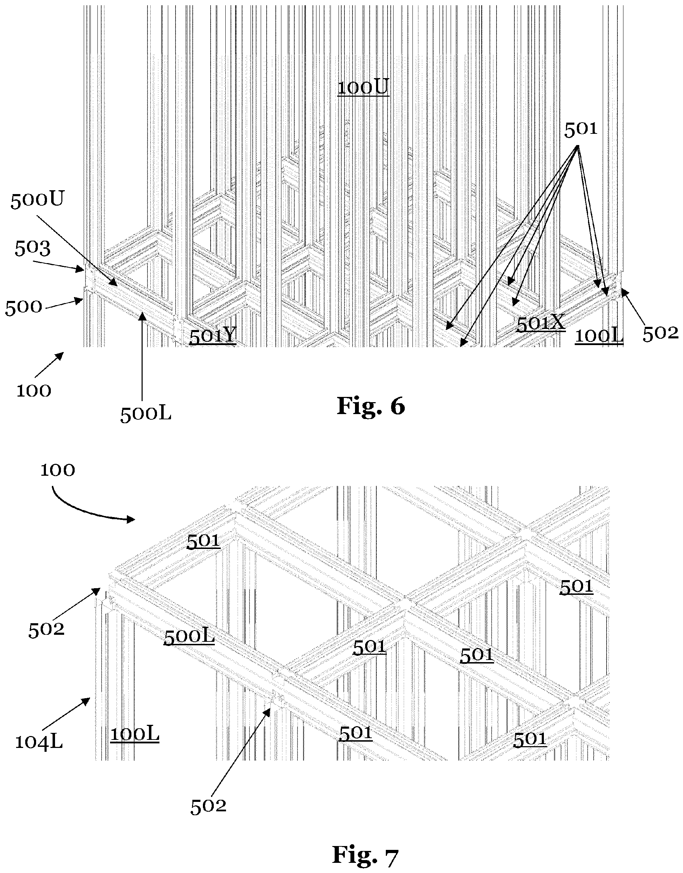

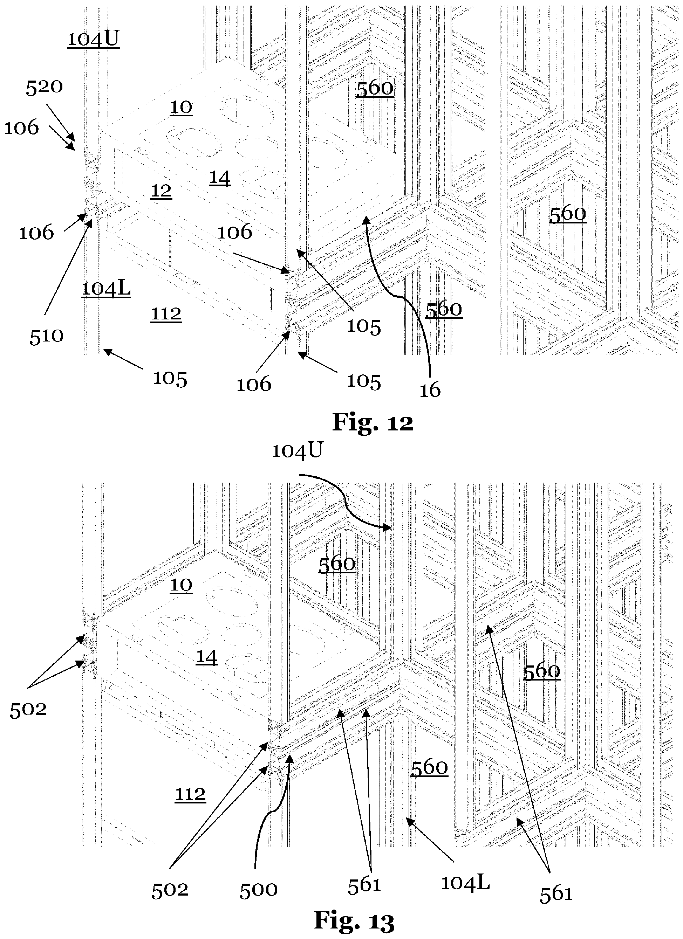

With continued reference to Fig. 5, and in addition with reference to Figs. 6 and 7, we will now describe in more detail specific construction details of the intermediate frame 500 described herein. However, it will be appreciated that many other constructions would be possible. As shown in Fig. 6, the intermediate frame 500 is made from a set of beams 501 joined together. More specifically, the beams 501, some of which 501X extend in the longitudinal X direction, and some of which 501Y extend in the transversal direction Y, interlock to form a grid-type structure which resembles the rail system 116 disposed at the top of the grid 100, and on which one or more container-handling vehicles usually operate. It will be understood that different interlocking systems may be used; accordingly, for the purposes of the present specification is not important to describe any such systems in detail. The beams 501 have each a tubular cross section 502, a portion of which is labelled in Fig. 7 (but please refer to Figs. 12 and 13 for a full view of said cross section 502). Tubular profiles provide strength whilst being light. The interlocking arrangement, as is often the case, is secured by one or more bolt systems, one of which is also shown in Fig. 6.

One peculiarity of the intermediate frame 500 described herein, is that the intermediate frame 500 is made up of one lower intermediate frame part 500L and at least one upper intermediate frame part 500U. For clarity, the lower intermediate frame part 500L is represented without the upper intermediate frame part 500U and the upper portion of the storage grid 100U, in Fig. 7. The intermediate frame 500 may be built independently of the storage grid 100, for example at a separate manufacturing location, and then placed on the storage grid 100. Alternatively, the intermediate frame 500 may be built contextually with the erection of the storage grid 100.

With continued reference to Fig. 7, once the lower part of the intermediate frame 500L has been put in place, the upper intermediate frame part 500U may be stacked thereupon, and secured to it using the bolt systems 503 introduced here above. Once the upper part of the intermediate frame 500U has been put in place, the upper portion of the storage grid 100U may be built thereon. This leads us to an important consideration: while the described intermediate frame 500 introduces a discontinuity between lower structural upright members 104L forming the lower part 100L of the storage grid 100, and upper structural upright members 104U forming the upper part 100U of the storage grid 100, this may not necessarily be the case. For example, in an alternative arrangement is envisaged that there is structural continuity between the lower and upper structural upright members 104L, 104U defined by the intermediate frame 500, with the intermediate frame 500 being configured as a 'ring' surrounding and reinforcing, at a given vertical level along the height/depth Z of the grid, otherwise continuous upright structural members 104. The latter arrangement would equally provide a suitable form of reinforcement to the grid 100, for achieving heightened grids 100 which would otherwise not be possible. However, this other configuration of intermediate frame is not further described herein.

Returning now to the described implementation of the intermediate frame 500, which does introduce a discontinuity between the lower grid part 100L and the upper grid part 100U, and with reference now to Figs. 12 and 13, it may be appreciated how the intermediate frame 500 defines one or more lower interfaces 510 supported by the lower vertically extending structural upright members 104L. In more detail, these lower interfaces 510 are supported on respective ends 105 of the one or more lower vertically extending structural upright members 104L. In yet further detail, said one or more lower interfaces 510, as it can be seen in Fig. 12 for example, are directly supported on corresponding one or more end cross sections 106 of the one or more lower vertically extending structural upright members 104L.

Similarly, and with continued reference to Fig. 12, the intermediate frame 500 defines upper interfaces 520 which support respective upper structural upright members 104U. Also, these upper interfaces 520 will support one or more respective ends 105 of said upper structural upright members 104U. Further, these upper interfaces 520 are configured to directly support corresponding one or more end cross sections 106 of the one or more upper structural upright members 104U.

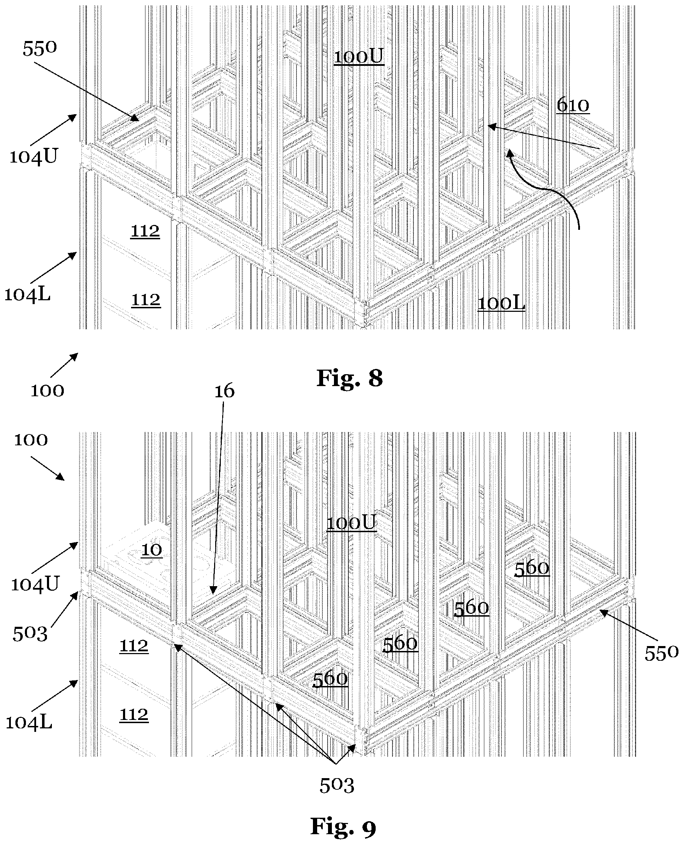

One particularly interesting feature of the intermediate frame 500 described herein, is that the intermediate frame 500 defines an intermediate grid 550, similar in shape to the shape of the rail system 116 present on top the storage grid 100. By mirroring the shape of said rail system 116, the intermediate frame 500 defines a number of intermediate grid openings 560, as also visible for example in Figs. 12 and 13. In the shown arrangement, there are 12 such grid openings 560, as better seen, for example, from Figs. 8 and 9. These grid openings 560 define respective one or more lower storage column portions 102L below the one or more intermediate grid openings 560, and one or more upper storage column portions 102U above the one or more intermediate grid openings 560, as seen for example with reference to Fig. 5.

### Removable decks in combination with intermediate frames as described herein

It is therefore possible, and preferable, to design the grid openings 560 to allow passage of the storage containers 112 therethrough, for example vertically, during a container-handling operation performed by one of the container-handling vehicles. If, in addition, each intermediate grid opening 560 is configured to support a removable deck 10 therewithin, then it would be possible to store additional storage containers 112 in the storage grid 100 by supporting them on said removable deck 10, whilst any lower containers stored in the same storage column 102, below the removable deck 10, can still be accessed when the removable deck is removed 10. This provides for a very interesting functionality of the storage grid 100 described herein, which functionality is enabled by the provision of the intermediate frame 500 described herein: that is, more storage bins may be added to the system due to the provision of a taller grid 100, without the need necessarily to stack them on lower bins, thus potentially exceeding weight limits; rather, the additional storage bins may be supported on a removable deck 10, which may be provided in combination with the intermediate frame 500.

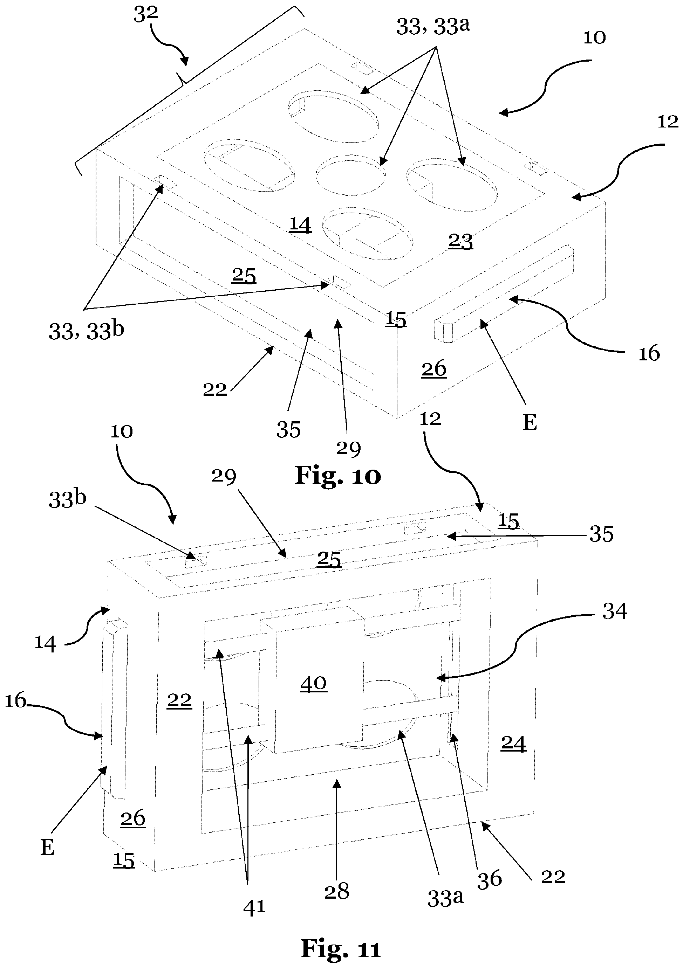

To facilitate the use of such removable decks 10 with the taller grids 100 described herein, each intermediate grid opening 560 is equipped with one or more lips or recesses 561 for receiving corresponding supporting elements 16 of the removable deck 10. The Figures that best show this aspect of the disclosure are still Figs. 12 and 13. In Fig. 12, the removable deck 10 is about to be received in a corresponding intermediate grid opening 560. In Fig. 13, the removable deck is shown in a fully received configuration, inside the corresponding grid opening 560. In some examples of removable decks 10, this is facilitate by providing retractable supporting elements 16, as further described below, particularly with reference to Figs. 10 and 11, which show the constructive details of a removable deck 10, as described herein.

The removable deck 10 described herein for an intermediate grid opening 560 of an intermediate frame 500 as also described herein, has a main body 12 comprising a platform 14 for accommodating one or more storage containers 112 thereon. As mentioned above, the removable deck 10 also includes one or more supporting elements 16 to support the main body 12 on the intermediate frame 500, within any of the intermediate grid openings 560, as required.

In the described example, the removable deck 10 has a main body 12 in the form of an outer shell structure 22. The container-bearing platform 14 constitutes a portion of said outer shell structure 22. Further, the described removable deck 10 is box shaped, meaning that its main body 12 (i.e., the outer shell structure 22) are generally in the shape of a parallelepiped. The platform 14 constitutes an upper face 23 of said main body 12 and outer shell structure 22.

As it may be seen particularly with reference to Figs. 10 and 11, the main body 12 of the removable deck 10 defines various openings, cut-outs, windows or recesses, collectively labelled 32 - which however have different functions. A first set 33a of the openings 33 are provided on the platform 14, and are configured to provide access from above the removable deck 10 to a space 28 inside the outer shell structure 22. These openings 33a may also be helpful in making the removable decks 10 lighter. A second set 33b of the openings 33 is provided on the main body 12, around a periphery thereof, near corners 15 of the shell-like structure 22 of the main body 12 of the removable deck 10, for gripping the removable deck 10, which may be useful for example for lifting the removable deck 10 vertically using a container-handling vehicle provided on the automated storage and retrieval system 1000, as known. Accordingly, the removable deck 10 may be placed in the intermediate frame 500, when necessary, or removed from the intermediate frame 500, also when necessary, fully automatically. These operations may be integrated with other storage container management operation, as earlier described. The second openings 33b, in more detail, are configured to provide access from above the deck 10 to a space 29 surrounding the outer shell structure 22, which facilitate said operations.

On a lower panel 24 of the casing 22 forming the removable deck 10, is a window 34 which provides access to an actuator 40, which will be described further below. This window also makes the removable deck 10 lighter. Further, recesses 35 are located on opposed side panels 25 of the outer shell structure 22 forming the main body 12 of the removable deck 10. This facilitates the gripping operations described above. Finally, respective cut-outs 36 (better visible in Fig. 11) are located on opposed end panels 26 of the deck 16.

Though it may be possible to place and remove the decks 10 without providing reconfigurable supporting elements, in the described deck 10 the supporting elements 16 are indeed reconfigurable between a first, extended position E (shown in Figs. 10, 11 and 12)and a second, retracted position (shown in Fig. 13). In the first, extended position E the supporting elements 16 are configured to engage the intermediate frame 500. In the second, retracted position the supporting elements 16 are configured to be disengaged from the intermediate frame 500. Accordingly, in Fig. 13, the deck 10 is still 'floating' in the intermediate frame. It will be necessary to draw the reconfigurable supporting elements 16, through the corresponding cut-outs 36 on the end panels 26 of the shell-like deck 10, to the extended position E to secure the deck 10 in the intermediate frame 500.

Focussing the attention now on the actuator 40, the actuator 40 is arranged to reconfigure the supporting elements 16 of the deck 10. In the disclosed actuator, 40 there are moveable actuation arms 41 operationally coupled to the reconfigurable supporting elements 16, respectively. The actuator 40 is accommodated within the main body 12 of the removable deck 10, as shown in Figs. 10 and 11. The actuator 40 may take many different forms and shapes, and it goes beyond the present specification to discuss the details of all possible forms and operation principles. For example, the actuator 40 may be an electromechanical actuator, or a pneumatic actuator. The actuator 40 may be controlled by any of the container-handling vehicles or it may be controlled by the central control unit of the ASRS.

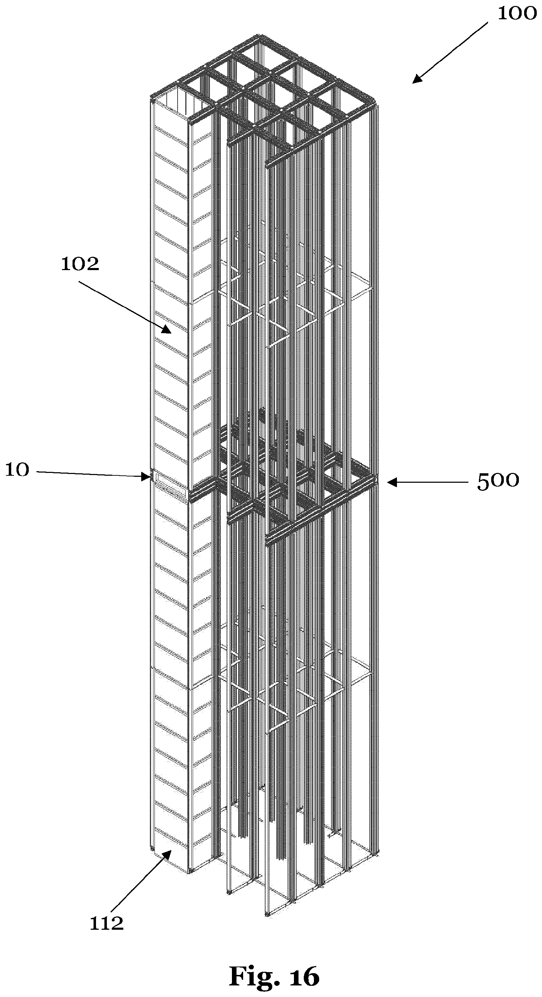

With reference to Fig. 16, there is shown a storage grid 100 for an ASRS as described herein, in use. To summarise, the storage grid 100 has a plurality of vertically extending structural upright members 104 that defines corresponding vertically extending storage columns 102. On the left-most storage column 102 of Fig. 16 two stacks of 14 storage containers 112 each may be seen. The lower stack rest on a floor of the storage grid 100. The upper stack rests on a removable deck 10 as described herein. The removable deck 10 is in turn supported by an intermediate frame 500, as described herein. A set of rails 116 is disposed on the storage grid 100, which serve for one or more vehicles (not shown in Fig. 16) to travel thereon, and perform storage and retrieval operations on the storage containers 112.

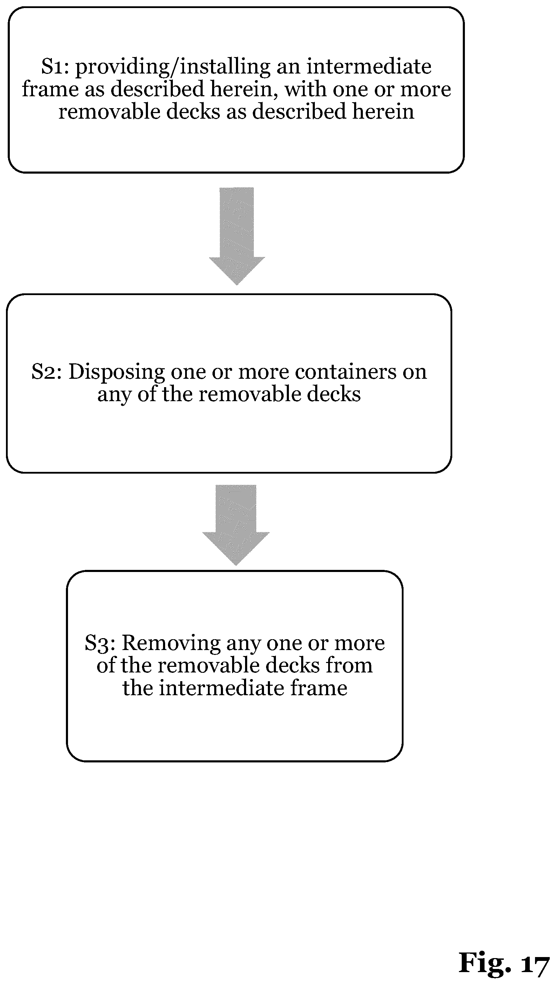

With reference now to Fig. 17, the present specification therefore also discloses a method of heightening a storage grid 100 for an automated storage and retrieval system 1000 as disclosed herein, wherein the method comprises providing S1 an intermediate frame 500 as defined herein. With continued reference to Fig. 17, the present specification also discloses a method of operating an automated storage and retrieval system 1000 as disclosed herein, wherein the storage grid 100 comprises an intermediate frame 500 as disclosed herein and at least one removable deck 10 as disclosed herein, the method comprising:
storing S2, optionally using one or more container-handling vehicles, one or more storage containers 112 on said at least one removable deck 10, and/or,
removing S3, also optionally using one or more of said vehicles, the at least one removable deck 10 from the intermediate frame 500.

According to the present specification, an intermediate frame may be used in a storage grid for an automated storage and retrieval system with a view to strengthening and heightening the grid, to include addition storage space. The presence of the intermediate frame defines a lower portion of the storage grid below the intermediate frame, and an upper portion of the storage grid above the intermediate frame. The upper portion of the storage grid is supported by the lower portion of the storage grid and by the intermediate frame, in cooperation. This means that the lower portion of the storage grid may now support more weight than would otherwise be the case, and this provides the opportunity for heightening the grid to a taller grid than would otherwise be possible. It is particularly desirable and advantageous to form the intermediate frame as a grid structure, matching the cross-sectional shape (on a plane P, as described herein) of the storage grid to which the intermediate frame is applied, that is with one or more grid openings. It is also particularly desirable and advantageous to configure the grid-shaped intermediate frame to support respective removable decks, with the shape of the removable decks matching corresponding grid openings formed by the intermediate frame. Accordingly, the removable decks may be designed to be placed in the intermediate frame, or removed therefrom, including optionally by any container-handling vehicle operating on the storage grid. While the storage grid is heightened to store additional storage containers, the storage containers may now be placed on any provided removable decks on the intermediate frame, rather than being stacked upon lower storage containers, resting on a floor of the storage grid. However, cleverly, any storage containers stored below the removable decks may still be accessed by removing the removable deck, and this may be done via the container-handling vehicles. These additional operations may be fully integrated into the automatic operations of the ASRS.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

The following numbered clauses also form part of the present disclosure:
1. An intermediate frame (500) for heightening a storage grid (100) of an automated storage and retrieval system (1000), the storage grid (100) comprising a plurality of vertically extending structural upright members (104) defining one or more vertically extending storage columns (102) within each of which one or more storage containers (112) may be stacked, the intermediate frame (500) being configured to define, in use, a lower portion (100L) of the storage grid (100) below the intermediate frame (500), and an upper portion (100U) of the storage grid (100) above the intermediate frame (500), wherein the upper portion (100U) of the storage grid (100) is supported by the lower portion (100L) of the storage grid (100) and by the intermediate frame (500), in cooperation.
2. The intermediate frame (500) of clause 1, wherein the intermediate frame (500) comprises a set of beams (501) joined together;
   optionally, wherein the beams have each a tubular cross section (502);
   optionally, wherein the beams are joined together by one or more bolts (503) to form the intermediate frame (500);
   optionally, wherein the beams (501) have the same cross section (502).
3. The intermediate frame (500) of clause 2, wherein the intermediate frame (500) comprises a set of parallel beams (501X) extending in a longitudinal direction (X) and/or a set of parallel beams (501Y) extending in a transversal direction (Y) perpendicular to the longitudinal direction (X).
4. The intermediate frame (500) of clause 3, wherein the intermediate frame (500) extends as a predominantly two-dimensional structure about a notional plane (P) parallel to said longitudinal and transversal directions (X, Y).
5. The intermediate frame (500) of any one of the preceding clauses, wherein the intermediate frame (500) comprises at least one lower intermediate frame part (500L) and at least one upper intermediate frame part (500U);
   optionally, wherein the at least one lower frame part (500L) and upper intermediate frame parts (500U) are configured to stack the one(s) on the other(s).
6. The intermediate frame (500) of any one of the preceding clauses, wherein the intermediate frame (500) comprises one or more lower interfaces (510) configured to be supported by one or more lower vertically extending structural upright members (104L);
   optionally, wherein said one or more lower interfaces (510) are configured to be supported on respective ends (105) of the one or more lower vertically extending structural upright members (104L);
   optionally, wherein said one or more lower interfaces (510) are configured to be directly supported on corresponding one or more end cross sections (106) of the one or more lower vertically extending structural upright members (104L).
7. The intermediate frame (500) of any one of the preceding clauses, wherein the intermediate frame (500) comprises one or more upper interfaces (520) configured to support one or more upper vertically extending structural upright members (104U);
   optionally, wherein said one or more upper interfaces (520) are configured to support one or more respective ends (105) of said one or more upper vertically extending structural upright members (104U);
   optionally, wherein said one or more upper interfaces (520) are configured to directly support corresponding one or more end cross sections (106) of the one or more upper vertically extending structural upright members (104U).
8. The intermediate frame (500) of any one of the preceding clauses, wherein the intermediate frame (500) defines an intermediate grid (550) comprising one or more intermediate grid openings (560) defining respective one or more lower storage column portions (102L) below the one or more intermediate grid openings (560), and one or more upper storage column portions (102U) above the one or more intermediate grid openings (560).
9. The intermediate frame (500) of clause 8, wherein said one or more grid openings (560) are dimensioned and configured to allow passage of the storage containers (112) therethrough, optionally vertically.
10. The intermediate frame (500) of clause 9, wherein each intermediate grid opening (560) is configured to support a removable deck (10) therein;
   optionally, wherein each intermediate grid opening (560) comprises one or more recesses (561) for receiving corresponding supporting elements (16) of the removable deck (10).
11. A removable deck (10) for an intermediate grid opening (560) of an intermediate frame (500) according to clause 10, the removable deck (10) comprising:
   a main body (12) comprising a platform (14) for accommodating one or more of said storage containers (112) thereon; and,
   one or more supporting elements (16) configured to support the main body (12) on the intermediate frame (500), within said intermediate grid opening (560).
12. The removable deck (10) of clause 11, wherein the main body (12) comprises an outer shell structure (22);
   optionally, wherein said platform (14) constitutes a portion of said outer shell structure (22).
13. The removable deck (10) of clause 11 or 12, wherein said main body (12) and/or outer shell structure (22) are generally in the shape of a parallelepiped; optionally, wherein said platform (14) constitutes an upper face (23) of said main body (12) and/or outer shell structure (22).
14. The removable deck (10) of clause 11, 12 or 13, wherein the main body (12) defines one or more openings, cut-outs, windows or recesses (32).
15. The removable deck (10) of clauses 12, 13 and 14, wherein a first set (33a) of one or more openings (33) are provided on said platform (14), and are configured to provide access from above the removable deck (10) to a space (28) inside the outer shell structure (22).
16. The removable deck (10) of clause 15, wherein a second set (33b) of one or more openings (33) are provided on said main body (12) for gripping the removable deck (10) and for lifting the removable deck (10) vertically using a container-handling vehicle provided on the automated storage and retrieval system (1000);
   optionally, wherein said one or more second openings (33b) are disposed at or close one or more respective corners (15) of the platform (14);
   optionally, wherein said one or more second openings (33b) are configured to provide access from above the deck (10) to a space (29) surrounding the outer shell structure (22).
17. The removable deck (10) of clause 14, 15 or 16, comprising one or more windows (34) through a lower panel (24) of said outer shell structure (22).
18. The removable deck (10) of any one of clauses 14 to 17, comprising one or more recesses (35) located on one or more side or end panels (25) of the outer shell structure (22), such as on opposed side panels (25) thereof.
19. The removable deck (10) of any one of clauses 14 to 18, comprising one or more openings (36) located on one or more side or end panels (26) of the outer shell structure (22), such as on opposed end panels (26) thereof.
20. The removable deck (10) of any one of clauses 11 to 19, wherein the one or more supporting elements (16) are reconfigurable between a first, extended position (E) and a second, retracted position, wherein in the first, extended position (E) the supporting elements (16) are configured to engage the intermediate frame (500), and in the second, retracted position the supporting elements (16) are configured to be disengaged from the intermediate frame (500).
21. The removable deck (10) of clauses 14 and 20, wherein the one or more reconfigurable supporting elements (16) are configured to project through at least one of said one or more openings, cut-outs, windows or recesses (32), when the reconfigurable supporting elements (16) are in the first, extended position (E).
22. The removable deck (10) of clause 20 or 21, wherein the removable deck (10) further comprises an actuator (40) configured to reconfigure said one or more reconfigurable supporting elements (16);
   optionally, wherein the actuator (40) comprises one or more moveable actuation arms (41) operationally coupled to said one or more reconfigurable supporting elements (16), respectively.
23. The removable deck (10) of clause 22, wherein the actuator (40) is accommodated within the main body (12) of the removable deck (10);
   optionally, wherein the actuator (40) is accommodated within the outer shell structure of the main body (12) of the removable deck (10).
24. A storage grid (100) for an automated storage and retrieval system (1000), the storage grid (100) comprising a plurality of vertically extending structural upright members (104) defining one or more vertically extending storage columns (102) within each of which one or more storage containers (112) may be stacked, and a set of rails (118, 120) disposed on said storage grid (100) upon which one or more vehicles (202, 204) may travel, each vehicle (202, 204) being configured to store in and/or retrieve from said storage grid (100) said one or more storage containers (112), the storage grid (100) further comprising:
   an intermediate frame (500) according to any one of clauses 1 to 9; or,
   an intermediate frame (500) according to clause 10 and, optionally, at least one removable deck (10) according to any one of clauses 11 to 23.
25. An automated storage and retrieval system (1000) comprising a storage grid (100) according to clause 24.
26. A method of heightening a storage grid (100) for an automated storage and retrieval system (1000), the storage grid (100) comprising a plurality of vertically extending structural upright members (104) defining one or more vertically extending storage columns (102) within each of which one or more storage containers (112) may be stacked, the method comprising:
   providing (S1) an intermediate frame (500) configured to define, in use, a lower portion (100L) of the storage grid (100) below the intermediate frame (500), and an upper portion (100U) of the storage grid (100) above the intermediate frame (500), wherein the upper portion (100U) of the storage grid (100) is supported by the lower portion (100L) of the storage grid (100) and by the intermediate frame (500), in cooperation.
27. A method of operating an automated storage and retrieval system (1000) according to clause 25, wherein the storage grid (100) comprises an intermediate frame (500) according to clause 10 and at least one removable deck (10) according to any one of clauses 11 to 23, the method comprising:
   storing (S2), optionally using one or more of said vehicles (202, 204), one or more storage containers (112) on said at least one removable deck (10), and/or
   removing (S3), also optionally using one or more of said vehicles (202, 204), the at least one removable deck (10) from the intermediate frame (500).

### List of references used in the drawings, description and claims:

10 Removable deck; 12 Main body of deck; 14 Platform of deck; 15 Corner of platform; 16 Supporting element of deck; 22 Outer shell structure; 23 Upper face of outer shell structure; 24 Lower panel of outer shell structure; 25 Side panels of outer shell structure; 26 End panels of outer shell structure; 28 Space inside the outer shell structure; 29 Space outside the outer shell structure; 32 Opening, cut-out, window or recess on main body of deck; 33 Opening; 33a First set of openings (to access space inside outer shell structure); 33b Second set of openings (for gripping the deck); 34 Lower-panel window;
35 Side-panel recess; 36 End-panel cut-out; 40 Actuator; 41 Actuation arm; E Extended/deployed configuration;
1000 Automated storage and retrieval system; 100 grid; 102 storage column; 104 vertically extending, structural upright member; 108 longitudinal direction X; 110 transversal direction Y; 114 vertical direction Z; 112 storage bin or container; 116 rail system; 118a, b pairs of rails or tracks in the longitudinal direction; 120a, b pairs of rails or tracks in the transversal direction; 122, 202, 204 container-handling vehicle(s); 124 access opening; 126, 128 port columns; 130, 132 ports;
300 body of container-handling vehicle; 302 first set of wheels; 303 second set of wheels; 304, 312 lifting device; 306 cantilever element; 308 gripping device; 310 internal cavity;
400 processing system; 402 processor; 404 main memory; 406 static memory; 408 network interface device; 410 display device; 412 input device; 414 cursor control device; 416 audio device; 418 data storage device; 422 instructions; 428 machine-readable storage media; 430 bus;
100L Lower portion of storage grid; 100U Upper portion of storage grid; 102L Lower storage column portion; 102U Upper storage column portion; 104L Lower structural upright member; 104U Upper structural upright member; 105 End of structural member; 106 End cross section of structural upright member; 118, 120 set of rails provided on the storage grid;
500 Intermediate frame; 500L Lower part of intermediate frame; 500U Upper part of intermediate frame; 501 Beam; 501X Longitudinally extending beam; 501Y Transversally extending beam; 502 Beam cross section; 503 Bolt system; 510 Lower interface of intermediate frame; 520 Upper interface of intermediate frame; 550 Intermediate grid; 560 Intermediate grid opening; 561 Support feature of intermediate frame/grid; P Notional plane of intermediate frame/grid;
S1 Providing/installing intermediate frame/grid; S2 Disposing one or more storage containers on a removable deck supported on the intermediate frame/grid; S3 Removing the removable deck from the intermediate frame/grid

## Claims

1. An intermediate frame (500) for heightening a storage grid (100) of an automated storage and retrieval system (1000), the storage grid (100) comprising a plurality of vertically extending structural upright members (104) defining one or more vertically extending storage columns (102) within each of which one or more storage containers (112) may be stacked, the intermediate frame (500) being configured to define, in use, a lower portion (100L) of the storage grid (100) below the intermediate frame (500), and an upper portion (100U) of the storage grid (100) above the intermediate frame (500), wherein the upper portion (100U) of the storage grid (100) is supported by the lower portion (100L) of the storage grid (100) and by the intermediate frame (500), in cooperation.

2. The intermediate frame (500) of claim 1, wherein the intermediate frame (500) comprises a set of beams (501) joined together;
optionally, wherein the beams have each a tubular cross section (502);
optionally, wherein the beams are joined together by one or more bolt systems (503) to form the intermediate frame (500);
optionally, wherein the beams (501) have the same cross section (502).

3. The intermediate frame (500) of claim 2, wherein the intermediate frame (500) comprises a set of parallel beams (501X) extending in a longitudinal direction (X) and/or a set of parallel beams (501Y) extending in a transversal direction (Y) perpendicular to the longitudinal direction (X).

4. The intermediate frame (500) of claim 3, wherein the intermediate frame (500) extends as a predominantly two-dimensional structure about a notional plane (P) parallel to said longitudinal and transversal directions (X, Y).

5. The intermediate frame (500) of any one of the preceding claims, wherein the intermediate frame (500) comprises at least one lower intermediate frame part (500L) and at least one upper intermediate frame part (500U);
optionally, wherein the at least one lower frame part (500L) and upper intermediate frame parts (500U) are configured to stack the one(s) on the other(s).

6. The intermediate frame (500) of any one of the preceding claims, wherein the intermediate frame (500) comprises one or more lower interfaces (510) configured to be supported by one or more lower vertically extending structural upright members (104L);
and/or,
wherein the intermediate frame (500) comprises one or more upper interfaces (520) configured to support one or more upper vertically extending structural upright members (104U).

7. The intermediate frame (500) of any one of the preceding claims, wherein the intermediate frame (500) defines an intermediate grid (550) comprising one or more intermediate grid openings (560) defining respective one or more lower storage column portions (102L) below the one or more intermediate grid openings (560), and one or more upper storage column portions (102U) above the one or more intermediate grid openings (560).

8. The intermediate frame (500) of claim 7, wherein said one or more grid openings (560) are dimensioned and configured to allow passage of the storage containers (112) therethrough, optionally vertically;
optionally, wherein each intermediate grid opening (560) is configured to support a removable deck (10) therein;
optionally, wherein each intermediate grid opening (560) comprises one or more lips and/or recesses (561) for receiving corresponding supporting elements (16) of the removable deck (10).

9. A removable deck (10) for an intermediate grid opening (560) of an intermediate frame (500) according to claim 8, the removable deck (10) comprising:
a main body (12) comprising a platform (14) for accommodating one or more of said storage containers (112) thereon; and,
one or more supporting elements (16) configured to support the main body (12) on the intermediate frame (500), within said intermediate grid opening (560).

10. The removable deck (10) of claim 9, wherein the main body (12) comprises an outer shell structure (22);
optionally, wherein said platform (14) constitutes a portion of said outer shell structure (22).

11. The removable deck (10) of claim 9 or 10, wherein said main body (12) and/or outer shell structure (22) are generally in the shape of a parallelepiped;
optionally, wherein said platform (14) constitutes an upper face (23) of said main body (12) and/or outer shell structure (22).

12. The removable deck (10) of claim 9, 10 or 11, wherein the main body (12) defines one or more openings, cut-outs, windows or recesses (32).

13. The removable deck (10) of claim 10, 11 and 12, wherein a (first) set (33a) of one or more openings (33) are provided on said platform (14), and are configured to provide access from above the removable deck (10) to a space (28) inside the outer shell structure (22),
and/or,
wherein a (second) set (33b) of one or more openings (33) are provided on said main body (12) for gripping the removable deck (10) and for lifting the removable deck (10) vertically using a container-handling vehicle provided on the automated storage and retrieval system (1000).

14. The removable deck (10) of claim 12 or 13, comprising one or more cut-outs (36) located on one or more side or end panels (26) of the outer shell structure (22), such as on opposed end panels (26) thereof.

15. The removable deck (10) of any one of claims 9 to 14, wherein the one or more supporting elements (16) are reconfigurable between a first, extended position (E) and a second, retracted position, wherein in the first, extended position (E) the supporting elements (16) are configured to engage the intermediate frame (500), and in the second, retracted position the supporting elements (16) are configured to be disengaged from the intermediate frame (500).

16. The removable deck (10) of claim 15, wherein the removable deck (10) further comprises an actuator (40) configured to reconfigure said one or more reconfigurable supporting elements (16);
optionally, wherein the actuator (40) comprises one or more moveable actuation arms (41) operationally coupled to said one or more reconfigurable supporting elements (16), respectively.

17. The removable deck (10) of claim 16, wherein the actuator (40) is accommodated within the main body (12) of the removable deck (10);
optionally, wherein the actuator (40) is accommodated within the outer shell structure of the main body (12) of the removable deck (10).

18. A storage grid (100) for an automated storage and retrieval system (1000), the storage grid (100) comprising a plurality of vertically extending structural upright members (104) defining one or more vertically extending storage columns (102) within each of which one or more storage containers (112) may be stacked, and a set of rails (118, 120) disposed on said storage grid (100) upon which one or more container-handling vehicles (202, 204) may travel, each vehicle (202, 204) being configured to store in and/or retrieve from said storage grid (100) said one or more storage containers (112), the storage grid (100) further comprising:
an intermediate frame (500) according to any one of claims 1 to 7; or,
an intermediate frame (500) according to claim 8 and, optionally, at least one removable deck (10) according to any one of claims 9 to 17.

19. An automated storage and retrieval system (1000) comprising a storage grid (100) according to claim 18.

20. A method of heightening a storage grid (100) for an automated storage and retrieval system (1000), the storage grid (100) comprising a plurality of vertically extending structural upright members (104) defining one or more vertically extending storage columns (102) within each of which one or more storage containers (112) may be stacked, the method comprising:
providing (S1) an intermediate frame (500) configured to define, in use, a lower portion (100L) of the storage grid (100) below the intermediate frame (500), and an upper portion (100U) of the storage grid (100) above the intermediate frame (500), wherein the upper portion (100U) of the storage grid (100) is supported by the lower portion (100L) of the storage grid (100) and by the intermediate frame (500), in cooperation.

21. A method of operating an automated storage and retrieval system (1000) according to claim 19, wherein the storage grid (100) comprises an intermediate frame (500) according to claim 8 and at least one removable deck (10) according to any one of claims 9 to 17, the method comprising:
storing (S2), optionally using one or more of said container-handing vehicles (202, 204), one or more storage containers (112) on said at least one removable deck (10), and/or,
removing (S3), also optionally using one or more of said container-handing vehicles (202, 204), the at least one removable deck (10) from the intermediate frame (500).
